# DEMANDE DE BREVET EUROPEEN

(11) **EP 4 556 775 A1**
(43) Date de publication de la demande: **21.05.2025**
(21) Numéro de dépôt: 24213047.4
(22) Date de dépôt: 14.11.2024
(51) Int. Cl.: F16L 37/084, F16L 37/42

(54) **ÉLÉMENT FEMELLE DE RACCORD FLUIDIQUE**

(30) Priorité: 15.11.2023 FR 2312519
(71) Demandeur: Staubli Faverges, 74210 Faverges-Seythenex (FR)
(72) Inventeur: DURIEUX, Christophe, 73200 GILLY SUR ISERE (FR)
(74) Mandataire: Lavoix

(57) **Abrégé**

Cet élément femelle (100) est prévu pour la connexion fluidique rapide à un embout (20) comportant une rainure circonférentielle (40) et comprend un verrou (140) avec une dent (150) est apte à pénétrer dans la rainure circonférentielle (40) de l'embout. Le verrou comprend aussi un anneau de passage (142), qui entoure le corps (102) et qui coopère avec des surfaces du corps de sorte que l'anneau est guidé en translation par rapport au corps selon un axe de verrouillage (Z102). Le verrou comprend un support de dent (154), qui présente une forme allongée et qui relie la dent (150) à l'anneau de passage, la dent étant décalée axialement vers l'avant de l'anneau de passage. Le verrou comprend aussi une surface d'actionnement (S156), qui est située à l'opposé de la dent (150) par rapport au corps (102).

## Description

La présente invention concerne un élément femelle d'un raccord fluidique.

De manière générale, un raccord fluidique comprend un élément femelle, qui ménage une embouchure de réception d'un élément mâle complémentaire, l'élément mâle étant appelé embout. L'élément femelle et l'élément mâle sont prévus pour être accouplés l'un à l'autre, de manière à établir une connexion fluidique, le raccord fluidique étant alors dans une configuration accouplée. L'élément femelle comprend généralement des moyens de verrouillage, qui sont prévus pour maintenir le raccord fluidique en configuration accouplée. On s'intéresse ici en particulier aux éléments femelles de raccord fluidique configurés pour être accouplés à un embout compact, c'est à dire un embout comportant une partie avant cylindrique et une rainure circonférentielle située en arrière de cette partie avant cylindrique, les moyens de verrouillage coopérant avec la rainure circonférentielle pour maintenir le raccord fluidique en configuration connectée.

Parmi les embouts compacts, on connait notamment les embouts au profil dit « turbo compact ». Un tel embout turbo compact comporte une face avant, qui est perpendiculaire à son axe longitudinal et délimite une partie cylindrique par l'intermédiaire d'un chanfrein d'entrée. Du côté arrière, la partie cylindrique rejoint une collerette présentant une partie avant conique et une partie arrière cylindrique. Une rainure circonférentielle à flancs droits est située à l'avant de cette partie cylindrique à proximité de la partie conique.

Les embouts turbo compacts sont souvent utilisés sur les bancs d'essais de moteurs automobiles - d'où leur nom - pour la connexion et la déconnexion fréquente de durites, de réservoirs, etc. Les embouts au profil turbo compact sont généralement utilisés dans des espaces exigus, où les manipulations - pour la connexion ou la déconnexion du raccord - sont difficiles. Par exemple, les embouts turbo compacts sont souvent fixés sur des récipients et sont implémentés de telle sorte que la rainure circonférentielle est très proche d'une paroi de ce récipient, la paroi étant alors perpendiculaire à l'axe longitudinal de l'embout. Cet agencement exige que les moyens de verrouillage de l'élément femelle dans la rainure soient très proches de l'embouchure de l'élément femelle, la manipulation de l'élément femelle étant peu pratique, voire dangereuse si la paroi sur laquelle est monté l'embout turbo compact est chaude.

US4541457 divulgue un élément femelle comportant un verrou avec une dent apte à pénétrer dans une rainure circonférentielle d'un embout compact. Le verrou est monté radialement sur le corps de l'élément de raccord, le verrou étant mobile radialement entre une position déverrouillée et une position verrouillée, avec la dent de verrou en regard de la face avant du corps et repoussée en position verrouillée par un ressort décalé longitudinalement de la dent de verrou et interposé entre une surface radiale externe du corps et une surface interne du verrou.

WO-2008/074933-A1 décrit, quant à lui, un connecteur femelle configuré pour recevoir un embout mâle comprenant une collerette circonférentielle. L'élément femelle comprend une bague de verrouillage, qui ménage un anneau de passage de l'embout mâle. Cette construction est compacte mais l'accès au verrou est très proche de l'embouchure et est souvent encombré. Les manipulations des moyens de verrouillage, en particulier pour la déconnexion du raccord, sont malaisées.

C'est à ces problèmes qu'entend plus particulièrement remédier l'invention, en proposant un élément femelle qui soit apte à la connexion à un embout compact tout en étant plus ergonomique.

À cet effet, l'invention concerne un élément femelle pour la connexion fluidique rapide à un embout comportant une rainure circonférentielle, cet élément femelle comprenant :
- un corps, qui ménage un passage de fluide et qui comprend:
   - une partie distale, de laquelle le passage débouche par une embouchure configurée pour recevoir l'embout dans une configuration emmanchée de l'embout, l'embouchure définissant un axe principal du corps,
   - une partie proximale, qui comprend des moyens de solidarisation avec une conduite de fluide,
   la partie distale et la partie proximale définissant respectivement un côté avant et un côté arrière du corps et de l'élément femelle,
- un verrou, qui comprend :
   - un anneau de passage, qui entoure le corps et,
   - une dent, qui est apte à pénétrer dans la rainure circonférentielle de l'embout,
   - une surface d'actionnement, qui est située à l'opposé de la dent par rapport à l'axe principal,
   le verrou étant mobile en translation suivant un axe de verrouillage perpendiculaire à l'axe principal entre une position de verrouillage, dans laquelle la dent pénètre dans la rainure circonférentielle de l'embout en configuration emmanchée, et une position de retrait, dans laquelle la dent ne pénètre pas dans la rainure circonférentielle,
- un moyen de rappel du verrou dans sa position de verrouillage,
dans lequel :
- le verrou comprend un support de dent, qui est agencé à l'extérieur du corps, qui présente une forme allongée avec une première extrémité, par laquelle le support de dent est relié à l'anneau de passage, et une deuxième extrémité, par laquelle le support de dent est relié à la dent, la dent étant décalée axialement vers l'avant de l'anneau de passage,
- la surface d'actionnement s'étend le long de l'axe principal vers l'arrière de l'anneau de passage,
- l'anneau de passage comprend une face proximale, qui s'étend dans un plan perpendiculaire à l'axe principal et qui est orientée vers l'arrière,
- l'élément femelle comprend une butée axiale arrière de verrou, qui ménage une face distale située en regard de la face proximale de l'anneau de passage, la butée axiale arrière étant configurée pour empêcher le déplacement axial de l'anneau de passage vers l'arrière du corps.

Grâce à l'invention, la dent et la surface d'actionnement sont décalés axialement l'une par rapport à l'autre, la surface d'actionnement étant reculée par rapport à la dent. L'actionnement du verrou est ainsi facilité, en particulier lorsque l'élément femelle est utilisé dans un environnement encombré. L'élément femelle, et par extension le raccord fluidique, sont plus ergonomiques.

Selon des aspects avantageux mais non obligatoires de l'invention, un tel élément femelle peut incorporer une ou plusieurs des caractéristiques suivantes prises isolément ou selon toute combinaison techniquement admissible :
- La dent comprend une face proximale et une face distale, qui est orientée à l'opposé de la face proximale et qui est perpendiculaire à l'axe principal, alors que la face proximale de la dent est située en regard d'une face distale du corps, et que la face distale de la dent constitue une face d'extrémité de l'élément femelle.
- Le corps ménage une butée axiale avant, qui est située en regard de la face distale de la butée de verrou, alors que l'anneau de passage comprend une face distale, qui est orientée à l'opposé de la face proximale de l'anneau de passage et qui coopère avec la butée axiale avant du corps de manière à empêcher le déplacement axial de l'anneau de passage vers l'avant du corps.
- Le verrou et le corps sont conformés de sorte à permettre la mise en place du verrou par une extrémité proximale du corps, jusqu'à ce que l'anneau de passage soit en appui contre la butée axiale avant du corps.
- L'anneau de passage comprend deux bras de jonction du support de dent à la surface d'actionnement, les deux bras étant situés de part et d'autre du corps, tandis que chaque bras ménage une surface d'appui, les deux surface d'appui étant situées en regard l'une de l'autre et étant parallèles à l'axe de verrouillage et parallèles à l'axe principal, que le corps comprend deux surfaces de guidage, qui sont ménagées de part et d'autres du corps, qui sont parallèles l'une à l'autre et qui sont chacune parallèles à l'axe principal, et que chacune des surfaces d'appui est située en regard d'une surface de guidage respective, les surfaces d'appui et de guidage coopérant entre elles de manière à guider le verrou entre sa position de verrouillage et sa position de retrait.
- Le corps est monobloc, la partie distale et la partie proximale faisant partie d'une même pièce, tandis que la butée axiale arrière de verrou est une bague d'arrêt, qui est distincte du corps et qui entoure le corps, et que le corps et la butée axiale arrière sont configurés pour permettre la mise en place de la butée axiale arrière par l'arrière du corps.
- La bague d'arrêt ménage une surface de contre-appui, qui est accessible depuis l'extérieur de l'élément femelle, qui est fixe par rapport au corps et qui est située à l'opposé de la surface d'actionnement par rapport à l'axe principal.
- L'élément femelle comprend un pion, qui est solidaire de la bague d'arrêt, tandis que le pion ménage une surface de contre-appui, qui est accessible depuis l'extérieur de l'élément femelle, qui est fixe par rapport au corps et qui est située à l'opposé de la surface d'actionnement par rapport à l'axe principal.
- La partie distale et la partie proximale sont des parties distinctes, qui sont assemblées l'une à l'autre pour former le corps, tandis que la partie distale forme l'embouchure du raccord et comporte la butée axiale avant du verrou, et que la partie proximale forme la butée arrière de verrou et comprend les moyens de solidarisation avec la conduite de fluide.
- La partie proximale du corps ménage une surface de contre- appui, qui est accessible depuis l'extérieur de l'élément femelle, qui est fixe par rapport au corps et qui est située à l'opposé de la surface d'actionnement par rapport à l'axe principal.
- Les moyens de solidarisation définissent un axe de connexion avec la conduite de fluide, alors que l'axe de connexion est orthogonal à l'axe principal.
- Le raccord comprend des moyens d'arrêt axial de la butée arrière de verrou.
- L'élément femelle comprend des moyens d'obturation du passage de fluide, les moyens d'obturation incluant :
   - une soupape, qui est mobile en translation le long de l'axe principal entre une position avant d'obturation, dans laquelle la soupape est en appui étanche contre un siège du corps et ferme le passage de fluide, et une position arrière d'ouverture, dans laquelle la soupape n'obture pas le passage de fluide,
   - un guide de soupape apte à guider la soupape en translation le long de l'axe principal, et
   - un ressort de rappel de la soupape dans sa position d'obturation,
   alors que la soupape est configurée pour être repoussée par l'embout de la position avant d'obturation vers la position arrière d'ouverture lors de l'introduction de l'embout dans l'embouchure.

L'invention sera mieux comprise, et d'autres avantages de celle-ci apparaîtront plus clairement à la lumière de la description qui va suivre, de plusieurs modes de réalisation d'un élément femelle, conformes à son principe, donnée uniquement à titre d'exemple et faite en référence aux dessins annexés, dans lesquels :
- [Fig 1] la figure 1 est une coupe longitudinale d'un raccord fluidique comprenant un élément femelle conforme à un premier mode de réalisation de l'invention, le raccord fluidique étant dans une configuration désaccouplée ;
- [Fig 2] la figure 2 est une vue en perspective éclatée du raccord fluidique de la figure 1 ;
- [Fig 3] la figure 3 représente respectivement, sur deux inserts a) et b), une coupe du raccord fluidique de la figure 1, selon un plan longitudinal L102 repéré à la figure 2, le raccord fluidique étant dans une configuration déverrouillée et dans une configuration accouplée ;
- [Fig 4] la figure 4 est une coupe brisée, selon le plan longitudinal L102 et un plan médian M102 repérés à la figure 2, du raccord fluidique de la figure 1 dans la configuration accouplée ;

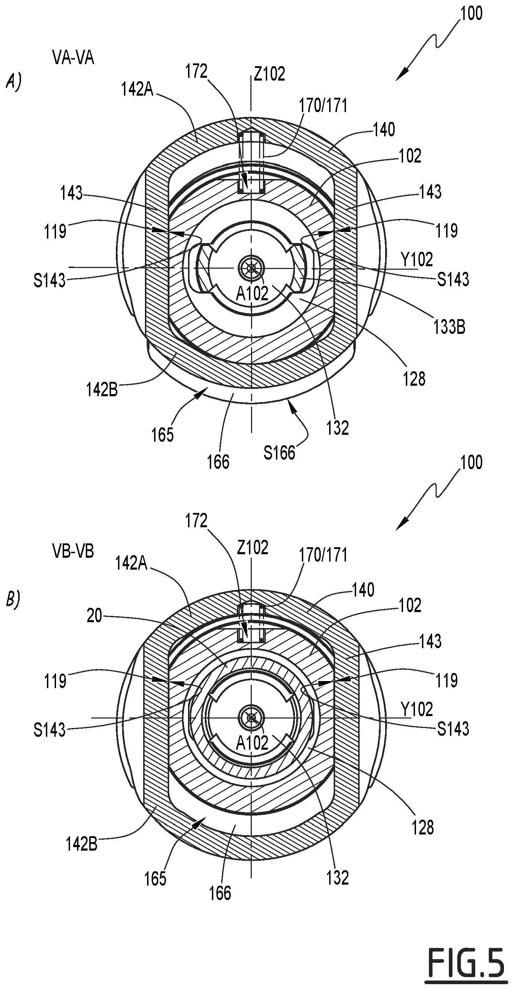

- [Fig 5] la figure 5 représente respectivement, sur deux inserts a) et b), une coupe transversale selon un plan VA-VA repéré à la figure 1 et selon un plan VB-VB repéré à la figure 3a), du raccord fluidique dans la configuration désaccouplée et dans la configuration déverrouillée ;
- [Fig 6] la figure 6 représente respectivement, sur deux inserts a) et b), une coupe longitudinale d'un corps et d'un verrou appartenant à l'élément femelle de la figure 1, le corps et le verrou étant représentés dans deux configurations successives au cours de l'assemblage de l'élément femelle ;
- [Fig 7] la figure 7 représente respectivement, sur deux inserts a) et b), une coupe longitudinale et une coupe transversale d'un élément femelle conforme à un deuxième mode de réalisation de l'invention ;
- [Fig 8] la figure 8 est une vue en perspective éclatée de l'élément femelle de la figure 7 ;
- [Fig 9] la figure 9 représente respectivement, sur deux inserts a) et b), une coupe longitudinale d'un élément femelle conforme à un troisième mode de réalisation de l'invention, représenté dans une configuration désaccouplée et dans une configuration déverrouillée ;
- [Fig 10] la figure 10 représente respectivement, sur deux inserts a) et b), une coupe longitudinale d'un élément femelle conforme à un quatrième mode de réalisation de l'invention et une vue en perspective de certaines pièces de l'élément femelle de l'insert a) ;
- [Fig 11] la figure 11 représente respectivement, sur deux inserts a) et b), une coupe longitudinale d'un élément femelle conforme à un cinquième mode de réalisation de l'invention et une vue en perspective de certaines pièces de l'élément femelle de l'insert a), et
- [Fig 12] la figure 12 est une vue en perspective d'un verrou appartenant à un élément femelle conforme à un sixième mode de réalisation de l'invention.

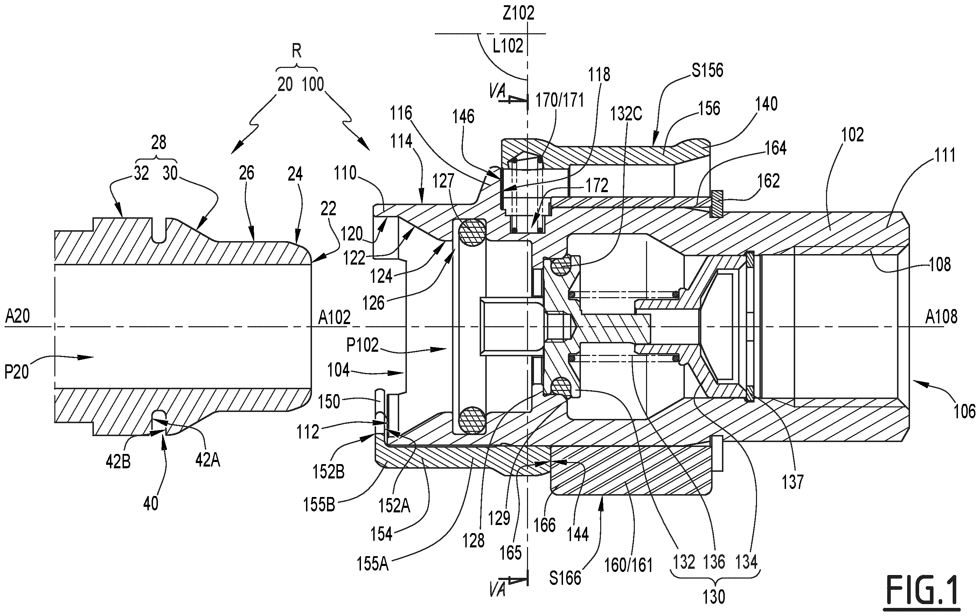

Un raccord R conforme à un premier mode de réalisation de l'invention est représenté à la figure 1. Le raccord R comprend un élément mâle, l'élément mâle étant un embout compact 20, et un élément femelle 100. Dans le cadre de la présente description, l'embout compact 20 est aussi appelé simplement embout 20. Le raccord R est ici représenté dans une configuration désaccouplée, l'embout 20 étant positionné face à l'élément femelle 100. L'embout 20 est configuré pour être partiellement reçu dans l'élément femelle 100, dans une configuration accouplée du raccord R, décrite plus loin.

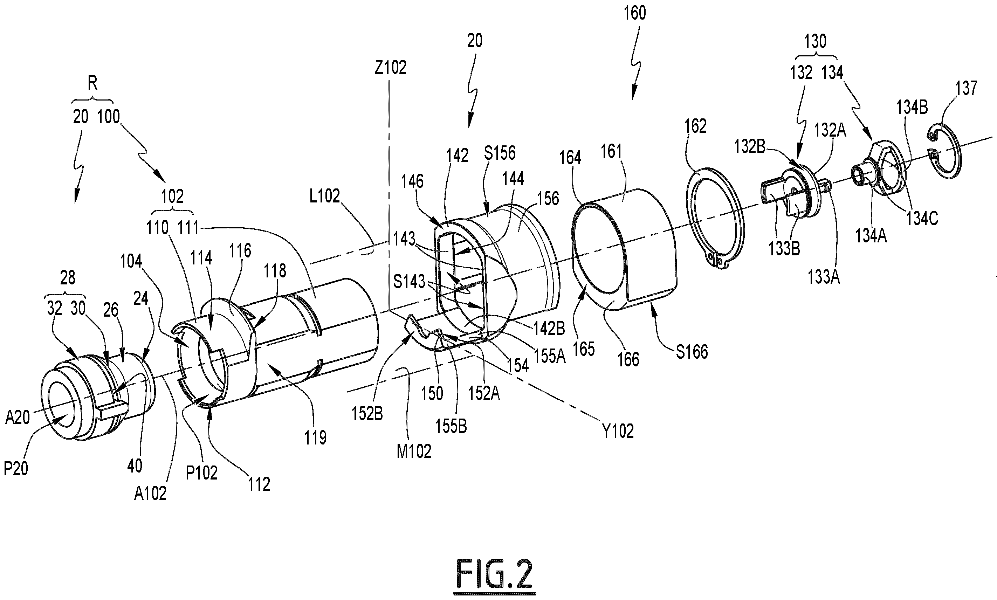

On décrit tout d'abord l'embout 20, qui est visible en coupe longitudinale à la figure 1 et en perspective à la figure 2.

L'embout 20 présente une forme globalement de révolution centrée sur un axe longitudinal A20. L'embout 20 est creux et ménage un passage fluidique P20, qui est centré sur l'axe longitudinal A20 et qui débouche de l'embout 20 par une face avant 22 de l'embout 20. Le passage fluidique P20 définit un côté interne de l'embout 20. Le côté interne est donc orienté vers l'axe longitudinal A20. On définit aussi un côté externe de l'embout 20 comme étant un côté orienté à l'opposé du côté interne.

La face avant 22 présente ici une forme d'anneau et est située dans un plan transversal de l'embout 20, c'est-à-dire un plan orthogonal à l'axe longitudinal A20. La face avant 22 est orientée vers l'élément femelle 100 à la figure 1 et définit un côté avant - dit aussi côté distal - de l'embout 20. L'embout 20 comprend aussi un côté arrière - dit aussi côté proximal -, qui est situé à l'opposé du côté avant le long de l'axe longitudinal A20.

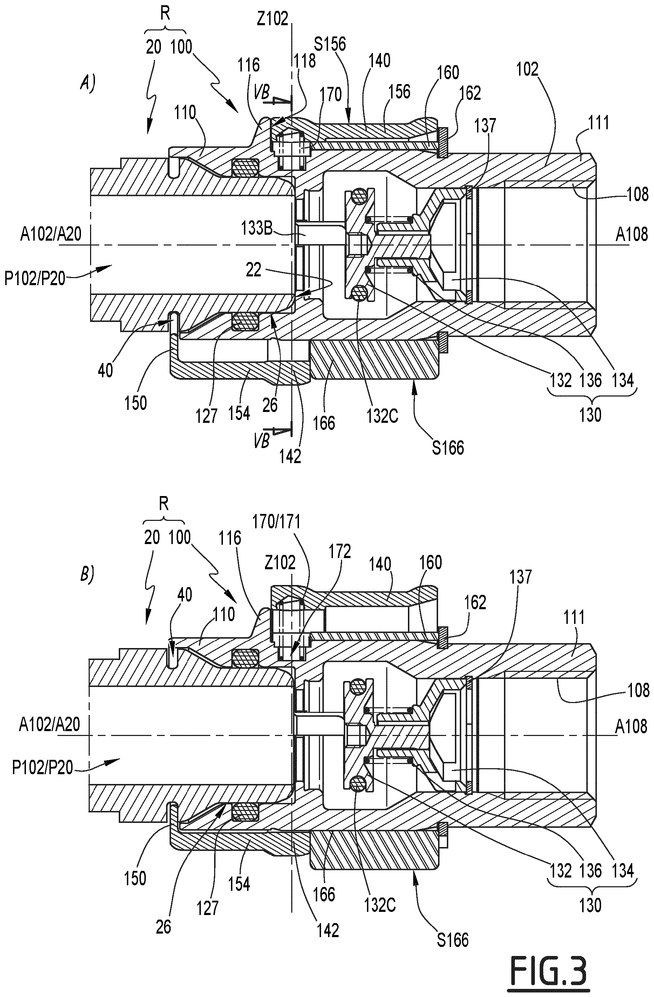

De manière générale, pour une pièce comprenant un côté avant / distal et un côté arrière / proximal, une surface (ou face) distale de cette pièce désigne une surface orientée vers le côté avant de cette pièce, tandis qu'une surface proximale désigne une surface orientée vers le côté arrière. Sauf mention expresse, les orientations des diverses pièces sont faites en référence à l'élément femelle 100 en configuration assemblée, comme représenté sur les figures 1, 3 a), 3 b), 4 et 5.

Dans l'exemple illustré, l'embout 20 est un embout dit « turbo compact », qui comprend, sur le côté externe en allant de la face avant 22 vers l'arrière de l'embout 20 :
- un chanfrein d'entrée 24, qui présente une forme tronconique centrée sur l'axe longitudinal A20 et divergent vers l'arrière de l'embout 20, puis
- une première partie cylindrique 26, qui présente un profil circulaire, puis
- une collerette 28, qui s'étend radialement en saillie par rapport à la première partie cylindrique, la première collerette 28 incluant une partie avant conique 30 et une partie arrière cylindrique 32. La partie avant conique 30 est centrée sur l'axe longitudinal A20 et diverge vers l'arrière de l'embout. La partie avant conique 30 est intercalée entre la première partie cylindrique 26 et la partie arrière cylindrique 32.

L'embout 20 comprend une rainure circonférentielle 40. La rainure circonférentielle 40 est ménagée en creux dans l'embout 20 et comprend un flanc proximal 42A et un flanc distal 42B, qui sont situés en regard l'un de l'autre. Le flanc distal 42B est préférentiellement un flanc droit, c'est-à-dire porté par un plan transversal à l'axe longitudinal A20. Dans l'exemple illustré, les deux flancs distal 42B et proximal 42A sont des flancs droits. De manière générale, la rainure circonférentielle 40 est située à l'arrière de la première partie cylindrique 26. La rainure circonférentielle 40 est ici ménagée en creux dans la collerette 28, la rainure circonférentielle 40 étant située à l'avant de la partie arrière cylindrique 30 et à proximité de la partie avant conique 30.

L'élément femelle de raccord 100 comprend un corps 102 creux, qui ménage un passage P102 de fluide, le passage P102 débouchant à l'extérieur du corps 102 par une embouchure 104, qui est configurée pour recevoir l'embout 20 et qui définit un côté avant - ou distal - du corps 102, et par une ouverture arrière 106. L'ouverture arrière 106 comprend ici un alésage taraudé, qui forme des moyens de solidarisation 108 du corps 102 avec une conduite de fluide. La conduite de fluide n'est pas représentée. Les moyens de solidarisation 108 définissent un axe de connexion A108.

Le passage P102 définit un côté interne du corps 102, et par extension de l'élément femelle 100. On définit aussi un côté externe du corps 102 comme étant un côté orienté à l'opposé au côté interne.

Le corps 102 comprend une partie distale 110, dans laquelle est ménagée l'embouchure 104, l'embouchure 104 définissant un axe principal A102 du corps 102. Dans le premier mode de réalisation de l'invention, l'axe de connexion A108 est aligné avec l'axe principal A102. Le corps 102 comprend aussi une partie proximale 111, dans laquelle est ménagée l'ouverture arrière 106 et qui comprend les moyens de solidarisation 108. La partie distale 110 et la partie proximale 111 définissent respectivement un côté avant et un côté arrière du corps 102 et, par extension, de l'élément femelle 100.

Dans le premier mode de réalisation de l'invention, le corps 102 est monobloc, c'est-à-dire que la partie distale 110 et la partie proximale 111 sont venues de matière. Autrement dit, les parties distale 110 et proximale 111 font partie d'une même pièce, qui est réalisée de préférence en métal. En variante, les parties distale et proximale sont des parties distinctes, qui sont assemblées l'une à l'autre pour former le corps 102 de l'élément femelle, comme décrit plus loin en références aux deuxième et troisième modes de réalisation de l'invention.

La partie distale 110 comprend une face distale 112, qui est orientée vers l'embout 20 et qui délimite l'embouchure 104. La face distale 112 est une surface située dans un plan perpendiculaire à l'axe principal A102.

Dans l'exemple illustré, la partie distale 110 comprend, sur le côté externe du corps 102 en allant de la face distale 112 vers l'arrière du corps 102 :
- une avancée 114, qui ménage ici une surface cylindrique,
- une butée axiale avant 116, qui est ici formée par une collerette dite tronquée, elle-aussi référencée 116.

La butée axiale avant 116 présente ici une forme globalement symétrique par rapport à un plan longitudinal L102 du corps 102, c'est-à-dire un plan comprenant l'axe principal A102. On définit un plan médian M102 comme étant un plan qui comprend l'axe principal A102 et qui est orthogonal au plan longitudinal L102. On définit un axe de verrouillage Z102 comme étant un axe orthogonal au plan médian M102. On définit un axe transversal Y102 comme étant un axe orthogonal au plan longitudinal L102. L'axe principal A102, l'axe de verrouillage Z102 et l'axe transversal Y102 forment un trièdre rectangle.

Le plan médian M102 partage le corps 102 - et par extension l'élément femelle 100 - en un côté haut et un côté bas, opposé au côté haut, la collerette tronquée 116 étant située du côté haut du plan médian M102. Dans le cadre de la présente description, les notions de haut, bas, droite, gauche, etc., font référence à l'orientation des pièces telles que représentées sur les figures, sachant qu'il peut en être autrement dans la réalité.

La collerette tronquée 116, qui est située sur le côté haut du corps 102, est limitée par deux plans latéraux, qui sont parallèles entre eux et qui s'étendent le long de l'axe principal A102. Les deux plans latéraux tronquant la collerette 116 sont ici parallèles au plan longitudinal L102. La collerette tronquée 116 présente une face d'arrêt distale 118, qui est perpendiculaire à l'axe principal A102 et qui est orientée vers l'arrière du corps 102.

Sur l'arrière de la collerette tronquée 116, l'extérieur du corps 102 présente une forme globalement cylindrique ménageant deux plats, qui sont agencés de part et d'autre du corps 102 symétriquement par rapport au plan longitudinal L102 et qui forment deux surfaces de guidage 119. Les deux surfaces de guidage 119 sont ainsi symétriques par rapport à l'axe principal A102 et parallèles à l'axe de verrouillage Z102.

Dans l'exemple illustré, la partie distale 110 comprend, sur le côté interne du corps 102 en allant de la face distale 112 vers l'arrière du corps 102 :
- une portion d'alésage cylindrique 120, puis
- une portion conique 122, qui est convergente vers l'arrière du corps 102, puis
- une portion cylindrique 124, qui est pourvue d'un logement annulaire 126 prévue pour recevoir un joint 127, le joint 127 étant destiné à assurer l'étanchéité de la connexion de l'embout 20 et de l'élément femelle 100.

Avantageusement, le corps 102 ménage une saillie 128, qui s'étend dans le passage P102 en saillie de la portion cylindrique 124 et qui est située en arrière du logement annulaire 126. La saillie 128 forme une butée avant pour l'embout 20 lors de l'emmanchement de l'embout 20 dans le passage P102. L'embout 20 est dit en configuration emmanchée lorsque l'embout 20 est reçu dans le passage P102 et est en butée avant contre la saillie 128.

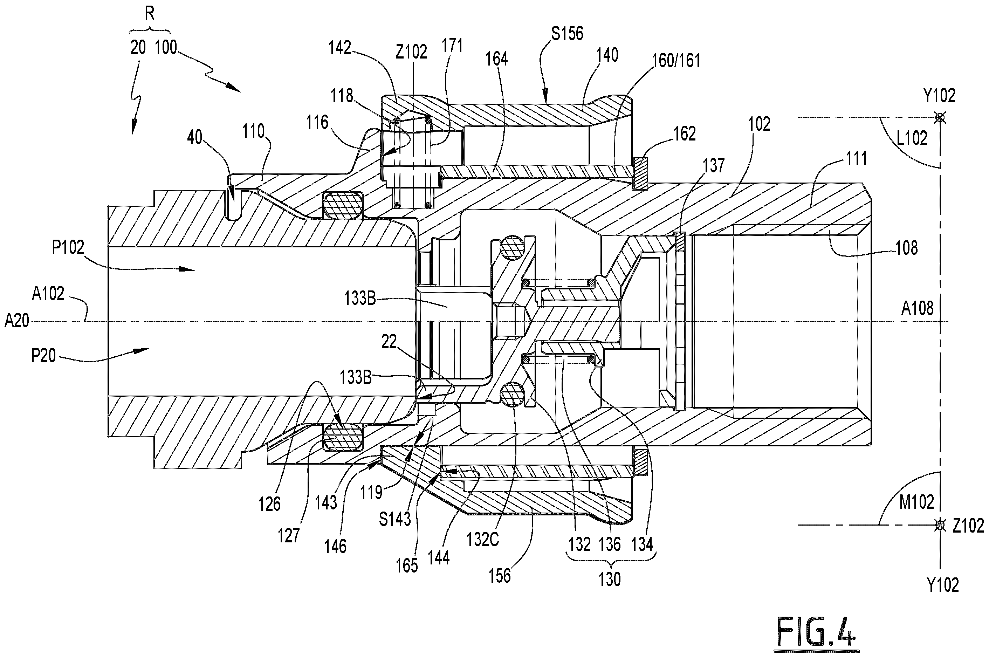

Avantageusement, la saillie 128 est une saillie annulaire, qui ménage vers l'arrière du corps 102 un siège 129, qui est configuré pour coopérer avec des moyens d'obturation 130 du passage de fluide P102. Les moyens de d'obturation 130, qui appartiennent à l'élément femelle de raccord 100, incluent ici :
- une soupape 132, qui est mobile en translation le long de l'axe principal A102 entre une position avant d'obturation, dans laquelle la soupape 132 est en appui étanche contre le siège 129 du corps 102 et ferme le passage P102 de fluide, et une position arrière d'ouverture, dans laquelle la soupape 132 n'obture pas le passage du fluide. Lorsque la soupape 132 est en position avant d'obturation, l'élément femelle 100 est dans une configuration d'obturation, comme illustré à la figure 1. Lorsque la soupape 132 est en position arrière d'ouverture, l'élément femelle 100 est dans une configuration d'ouverture, comme illustré aux figures 3 et 4.
- un guide de soupape 134, apte à guider la soupape 132 en translation le long de l'axe principal A102, et
- un ressort de rappel 136, qui est configuré pour repousser de la soupape 132 dans de sa position arrière d'ouverture vers sa position avant d'obturation.

La soupape 132 est configurée pour être repoussée par l'embout 20 de la position avant d'obturation vers la position arrière d'ouverture lors de l'introduction de l'embout 20 dans l'embouchure 104.

La soupape 132 comprend ici une tête de soupape 132A, qui présente globalement une forme de révolution autour de l'axe principal A102 et dans laquelle est ménagée une rainure circulaire 132B recevant un joint 132C. La soupape 132 comprend aussi une queue 133A, qui s'étend en saillie depuis une face arrière de la tête de soupape 132A et qui présente une forme cylindrique centrée sur l'axe principal A102.

Le guide de soupape 134 ménage un tube 134A, qui est centré sur l'axe principal A102 et qui est configuré pour coopérer, notamment par complémentarité de formes, avec la queue de soupape 133A, de sorte que la queue de soupape 133A coulisse dans le tube 134A. Le guide de soupape 134A est solidaire du corps 102, de sorte que la soupape 132 est guidée en translation par rapport au corps 102 le long de l'axe principal A102.

Dans le premier mode de réalisation de l'invention, le guide de soupape 134 est une pièce distincte du corps 102. Le guide de soupape 134 comprend ici, outre le tube 134A, un anneau 134B, qui est centré sur l'axe principal A102. Le guide de soupape 134 comprend aussi des pattes 134C, ici au nombre de deux, qui relient le tube 134A à l'anneau 134B. Dans l'exemple illustré, les pattes 134C sont diamétralement opposées par rapport à l'axe principal A102.

L'anneau 134B est en butée arrière contre une butée interne 137, ici formé par un circlip interne est logé dans une rainure circulaire ménagée en creux dans le passage de fluide P102. Le circlip interne est aussi référencé 137. Le ressort de rappel 136 est ici agencé autour du tube 134A et de la queue de soupape 133A, le ressort de rappel 136 agissant entre la face arrière de la tête de soupape 132A, et une face du guide de soupape 134 tournée vers l'avant. Le ressort de rappel 136 repousse ainsi la soupape 132 vers sa position avant d'obturation, tout en maintenant l'anneau 134B en butée arrière contre le circlip interne 137.

En variante non représentée, l'anneau 134B est aussi en butée avant contre un épaulement intérieur du passage de fluide.

La tête de soupape 132 comprend ici des extensions 133B, qui sont ici au nombre de deux et qui s'étendent en saillie depuis une face avant de la tête de soupape 132A parallèlement à l'axe principal A102 dans le passage P102. Lorsque la soupape 132 est en position avant d'obturation, les extensions 133B s'étendent en direction de l'embouchure 104 au-delà de la saillie annulaire 128. Les extensions 133B sont destinées à coopérer avec l'embout 20 lors de l'emmanchement de l'embout 20 dans le passage P102, la face avant 22 de l'embout 20 repoussant la soupape 132 en appuyant sur les extensions 133B, de sorte que la soupape 132 est en position arrière d'ouverture lorsque l'embout 20 est en butée contre la saillie annulaire 128.

L'élément femelle 100 comprend aussi un verrou 140. Le verrou 140 comprend un anneau de passage 142, qui entoure le corps 102 lorsque l'élément femelle 100 est en configuration assemblée.

L'anneau de passage 142 ménage un passage de forme globalement oblongue, qui s'étend dans sa longueur parallèlement à l'axe de verrouillage Z102. L'anneau de passage 142 comprend ici une portion haute 142A, une portion basse 142B, et deux bras 143. La portion haute 142A présente ici une forme en arc de cercle et est situé du côté haut du corps 102 lorsque l'élément femelle 100 est assemblé. La portion basse 142B présente ici une forme en arc de cercle et est situé du côté bas du corps 102. Les portions haute 142A et basse 142B sont ainsi situées de part et d'autre du plan médian M102. Les deux bras 143 sont situés de part et d'autre du plan longitudinal L102, autrement dit sont situés de part et d'autre du corps 102, et relient la portion haute 142A à la portion basse 142B.

Chaque bras 143 ménage une surface d'appui S143, les deux surfaces d'appui S143 étant situées en regard l'une de l'autre et étant parallèles à l'axe de verrouillage Z102 et parallèles à l'axe principal A102. Autrement dit les surfaces d'appui S143 sont chacune parallèles au plan longitudinal L102.

Chacune des surfaces d'appui S143 est située en regard d'une surface de guidage 119 respective, les surfaces d'appui S143 et de guidage 119 coopérant entre elles, notamment par coopération de surfaces, de manière à limiter les mouvements du verrou 140 à des mouvements parallèles au plan longitudinal L102. Autrement dit les surfaces d'appui S143 et de guidage 119 coopèrent entre elles pour guider le verrou entre sa position de verrouillage et sa position de retrait.

L'anneau de passage 142 comprend une face proximale 144, qui s'étend dans un plan perpendiculaire à l'axe principal A102 et qui est orientée vers l'arrière du corps 102 lorsque l'élément femelle 100 est en configuration assemblée.

L'anneau de passage 142 comprend une face distale 146, qui est orientée à l'opposé de la face proximale 144 de l'anneau de passage 142. Ainsi La face distale 146 s'étend dans un plan perpendiculaire à l'axe principal A102 et est orientée vers l'avant du corps 102.

La face distale 146 coopère avec la butée axiale avant 116 du corps 102, notamment par coopération de surfaces, de manière à empêcher le déplacement axial de l'anneau de passage 142 vers l'avant du corps 102. Plus précisément, la face distale 146 est en appui plan contre la face d'arrêt distale 118, de manière à limiter les mouvements du verrou 140 à des mouvements parallèles à un plan orthogonal à l'axe principal A102.

L'élément femelle de raccord 100 comprend aussi une butée axiale arrière 160, qui est configurée pour empêcher le déplacement axial de l'anneau de passage 142 vers l'arrière du corps 102. La butée axiale arrière 160 assure l'arrêt arrière du verrou 140 suivant l'axe principal A102. Ainsi la butée axiale arrière 160 sert à maintenir la face distale 146 de l'anneau 142 en appui contre la face d'arrêt distale 118 du corps 102. Dans le premier mode de réalisation, la butée axiale arrière 160 est formée par une bague d'arrêt 161, qui est distincte du corps 102 et qui est ici arrêtée au moyen d'un circlip externe 162. La bague d'arrêt 161 est décrite plus loin.

On comprend que la coopération des surfaces de l'anneau de passage 142 - surface d'appui S143 et surface distale 146 - avec les surfaces du corps 102 - surfaces de guidage 119 et face d'arrêt distale 118 - limite les mouvements du verrou 140 par rapport au corps 102 à des mouvements de translation parallèles à l'axe de verrouillage Z102.

L'anneau de passage 142 ménage un passage de forme globalement oblongue, qui s'étend, dans sa plus grande dimension, parallèlement à l'axe de verrouillage Z102, de sorte qu'une amplitude du mouvement de translation de l'anneau de passage 142 - et par extension du verrou 140 - par rapport au corps 102 est limitée entre une position haute dite « position de verrouillage », dans laquelle la portion basse 142B de l'anneau de passage 142 est en butée contre le reste de l'élément femelle 100, et une position basse dite « position de retrait », dans laquelle la portion la portion haute 142A de l'anneau de passage 142 est en butée contre le reste de l'élément femelle 100. Ainsi les surfaces d'appui S143 et de guidage 119 coopèrent entre elles de manière à guider le verrou 140 entre sa position de verrouillage et sa position de retrait.

Lorsque le verrou 140 est en position de verrouillage, l'élément femelle 100 est dit en configuration de verrouillage, comme illustré aux figures 1, 3 b), 4 et 5 a). Lorsque le verrou 140 est en position de retrait, l'élément femelle 100 est dit en configuration de retrait, comme illustré aux figures 3 a) et 5 b).

Le verrou 140 comprend aussi une dent 150, qui est apte à pénétrer dans la rainure circonférentielle 40 de l'embout 20. La dent 150 et la rainure circonférentielle 40 sont positionnées de sorte que lorsque l'embout 20 est en configuration emmanchée, et que le verrou 140 est en position de verrouillage, alors la dent 150 est reçue dans la rainure circonférentielle 40, empêchant de retirer l'embout 20 du passage P102. Lorsque l'embout 20 est en configuration emmanchée et que verrou 140 est en position de retrait, alors la dent 150 ne pénètre pas dans la rainure 40 et n'empêche pas le retrait de l'embout 20 du passage P102.

Dans le premier mode de réalisation de l'invention, le verrou 140 est réalisé d'une seule pièce. En particulier, la dent 150 est venue de matière avec le reste du verrou 140.

La dent 150 est située à distance de l'anneau de passage 142 et présente une forme aplatie, qui s'étend selon un plan orthogonal à l'axe principal A102. La dent 150 comprend une face proximale 152A, qui est orientée vers l'anneau de passage 142, et une face distale 152B, qui est orientée à l'opposé de la face proximale 152A. Autrement dit, la face proximale 152A est orientée vers l'arrière de l'élément femelle 100 en configuration assemblée. La face proximale 152A de la dent 150 est située en regard de la face distale 112 du corps 102.

La face proximale 152A est configurée pour coopérer, notamment par coopération de surface, avec le flanc distal 42B de la rainure circonférentielle 40. En particulier, la face proximale 152A est perpendiculaire à l'axe principal A102.

De préférence, la face distale 152B est parallèle à la face proximale 152A. La face distale 152B est de préférence perpendiculaire à l'axe principal A102.

La dent 150 est reçue dans un renfoncement de la face distale 112 du corps 102, de telle sorte que la face distale 152B de la dent 150 est accessible de l'extérieur de l'élément femelle 100. Dit autrement, la face distale 152B de la dent 150 constitue avantageusement une face d'extrémité de l'élément femelle 100, en particulier une face d'extrémité avant de l'élément femelle 100.

Le verrou 140 comprend aussi un support de dent 154, qui est agencé à l'extérieur du corps 102 en configuration assemblée de l'élément femelle 100. Le support de dent 154, dit aussi simplement support 154, présente une forme allongée qui s'étend le long de l'axe principal A102. Le support 154 présente ici une forme globalement cylindrique avec une section en arc de cercle. Le support 154 comprend une première extrémité 155A, par laquelle le support 154 est relié à l'anneau de passage 102, et une deuxième extrémité 155B, par laquelle le support 154 est relié à la dent 150. Le support de dent 154 s'étend depuis l'anneau de passage 102 vers l'avant du corps 102. Ainsi la dent 150 du verrou 140 est décalée axialement, le long de l'axe principal A102 vers l'avant de l'anneau de passage 142.

Le verrou 140 comprend aussi une chape d'actionnement 156 du verrou 140. La chape d'actionnement 156 s'étend de l'anneau de passage 142 vers l'arrière du corps 102. La chape d'actionnement 156 présente ici une forme globalement cylindrique avec une section en arc de cercle et s'étend depuis l'anneau de passage 142 vers l'arrière du corps 102.

La chape d'actionnement 156 ménage une surface d'actionnement S156, qui s'étend le long de l'axe principal A102, depuis l'anneau de passage 102, vers l'arrière de l'élément femelle 100. La surface d'actionnement S156 est globalement parallèle à l'axe principal A102 et présente une normale qui est globalement parallèle à l'axe de verrouillage Z102 et qui est ici orientée vers le haut. La dent 150 du verrou 140 est décalée axialement, le long de l'axe principal A102, par rapport à la surface d'actionnement S156.

La surface d'actionnement S156 s'étend depuis la portion haute 142A de l'anneau de passage 142 vers l'arrière du corps 102, tandis que le support de dent 154 relie la dent 150 à la portion basse 142B de l'anneau de passage 142. Ainsi la surface d'actionnement S156 est située à l'opposé de la dent 150 par rapport à l'axe principal A102. Les deux bras de jonction 143 de l'anneau de passage 142 joignent le support de dent 154 à la surface d'actionnement S156.

Lorsque que l'embout 20 et l'élément femelle 100 sont connectés, l'élément femelle 100 ne dépasse pas axialement de la rainure circonférentielle 40 de l'embout 20. La déconnexion du raccord R est très accessible, car la surface d'actionnement S156 est décalée vers l'arrière de l'élément femelle 100.

L'élément femelle 100 comprend aussi des moyens de rappel 170, qui sont configurés pour rappeler le verrou 140 dans sa position de verrouillage. Les moyens de rappel 170 sont ici réalisés par un ressort de compression 171, qui est intercalé entre la portion haute 142A de l'anneau de passage 142 et le corps 102. Une extrémité du ressort de compression 171 est reçue dans un logement 172, qui est ménagé dans le corps 102 et qui maintient le ressort de compression en position par rapport au corps 102, de sorte que le ressort de compression 171 agit suivant une direction sensiblement parallèle à l'axe de verrouillage Z102 pour rappeler le verrou 140 dans sa position de verrouillage.

On décrit à présent la bague d'arrêt 161, qui forme la butée axiale arrière 160.

Dans le premier mode de réalisation, la bague d'arrêt 161 est réalisée d'une seule pièce. La bague d'arrêt 161 entoure le corps 102, en particulier la partie arrière du corps 102, et est configurée pour être mise en place par l'arrière du corps 102. La bague d'arrêt 161 présente ici une portion annulaire 164, qui s'étend selon l'axe principal A102 et sur laquelle est ménagé un renflement inférieur, qui s'étend radialement à l'axe principal A102 et qui forme un taquet 166.

La bague d'arrêt 161 ménage une face distale 165, qui s'étend dans un plan orthogonal à l'axe principal A102. En configuration assemblée de l'élément femelle 100, la face distale 165 de la bague d'arrêt 161 est située en regard de la face proximale 144 de l'anneau de passage 142, de manière à empêcher le déplacement axial de l'anneau de passage 142, et par extension du verrou 140, vers l'arrière du corps 102.

Le taquet 166 présente une surface dite de contre-appui S166, la surface de contre-appui S166 étant globalement parallèle à l'axe principal A102 et présentant une normale qui est globalement parallèle à l'axe de verrouillage Z102 et qui est ici orientée vers le bas.

La surface de contre-appui S166 est ainsi orientée à l'opposé de la surface d'actionnement S156. Plus généralement, la surface de contre-appui S166 est opposée à la surface d'actionnement S156 par rapport à l'axe principal A102.

Lorsque l'élément femelle 100 est en configuration assemblée, la bague d'arrêt 161 est partiellement couverte par la chape d'actionnement 156, le taquet 166 émergeant de la chape d'actionnement 156. En particulier, la surface de contre-appui S166 émerge de la chape d'actionnement 156 et reste accessible depuis l'extérieur de l'élément femelle 100.

Le taquet 166 coopère avec la chape d'actionnement 156, notamment par coopération de formes, de manière à empêcher les mouvements de rotation de la bague d'arrêt 161 par rapport au corps 102 autour de l'axe principal A102. Ainsi la bague d'arrêt 161, et en particulier la surface de contre-appui S166 sont fixes par rapport au corps 102.

L'opérateur peut ainsi manoeuvrer le verrou 140, entre les positions de verrouillage et de retrait du verrou 140 et à l'encontre des moyens de rappel 171, en appuyant simultanément sur la surface d'actionnement S156 et la surface de contre-appui S166 de la butée axiale arrière 160.

Dans le premier mode de réalisation, la surface de contre-appui S166 est une surface de la bague d'arrêt 161. Dans d'autres modes de réalisation alternatifs décrits plus loin, la surface de contre-appui est ménagée autrement, notamment une surface ménagée par le corps 102.

On décrit à présent l'assemblage de l'élément femelle 100. L'assemblage de l'élément femelle 100 comporte les étapes suivantes.

De préférence, les éléments internes de l'élément femelle 100 sont mis en place en premier :
- Mettre en place le joint 127 dans logement annulaire 126.
- Mettre en place les moyens d'obturation 130 dans le corps 102. Pour cela, enfiler par l'arrière du passage P102 la soupape, 132 le ressort de rappel 136 de soupape, le guide de soupape 134 et le circlip interne 137.

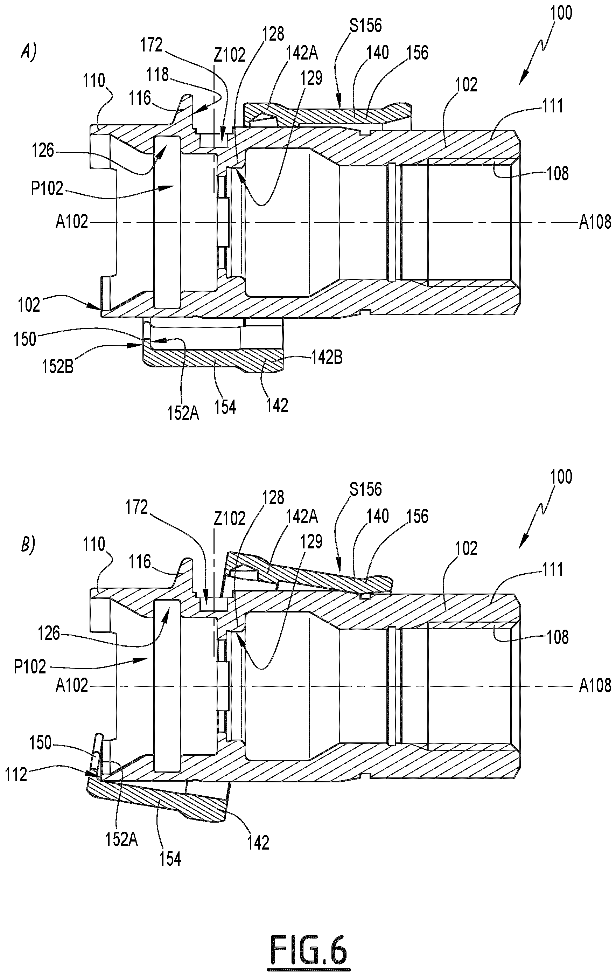

Enfiler le verrou 140 par l'arrière du corps 102, comme illustré aux figures 6 a) et 6 b), jusqu'à ce que le verrou 140 butte contre la collerette tronquée 116 du corps 102 - plus précisément jusqu'à ce que l'anneau de passage 142 soit en appui contre la butée axiale avant 116 du corps 102 -.

La face proximale 152A de la dent 150 est alors située en regard de la face distale 112 du corps 102. Ensuite, comme illustré à la figure 6 b), incliner le verrou par rapport au corps 102 tout en maintenant la face proximale 152A de la dent 150 en regard de la face distale 112 du corps 102, de manière à libérer l'accès au logement 172, et permettre la mise en place du ressort 171. Ensuite replacer le verrou 140 contre la collerette 116.

Ensuite, on met en place la butée axiale arrière 160 pour empêcher les mouvements de translation du verrou vers l'arrière du corps 102. Pour cela, enfiler la bague d'arrêt 161 par l'arrière du corps 102, sous la chape d'actionnement 156, le taquet 166 étant situé à l'opposé de la surface d'actionnement S156 par rapport à l'axe principal A102, jusqu'à ce que la bague d'arrêt 161 butte contre le verrou 140. Ensuite, immobiliser axialement la bague d'arrêt 161 en mettant en place le circlip externe 162.

On décrit à présent l'accouplement du raccord R.

Pour accoupler l'élément femelle 100 et l'embout 20, tout d'abord aligner l'axe principal A102 de l'élément femelle 100 et l'axe longitudinal A20 de l'embout 20, la face avant 22 de l'embout 20 étant orientée vers l'embouchure 104 de l'élément femelle 100. Le raccord R est alors dans la configuration de la figure 1.

Ensuite, rapprocher l'embout 20 de l'élément femelle 100 le long de l'axe principal A102, selon un mouvement de rapprochement.

Au cours du rapprochement, la partie avant conique 30 de la collerette 28 entre en contact avec la dent 150 et repousse la dent 150, entrainant le verrou 140 de sa position de verrouillage vers sa position de retrait. On comprend que la dent 150 frotte contre la surface externe de l'embout 20.

La première partie cylindrique 26 de l'embout coopère avec le joint 127 de l'élément femelle 100, assurant l'étanchéité du raccord R. Ensuite, l'extrémité de l'embout 20 entre en contact avec les extensions 133B de la tête de soupape 132, entrainant la soupape 132 vers sa position d'ouverture.

Le mouvement de rapprochement continue jusqu'à ce que l'embout 20 vienne en butée contre la saillie 128. Le raccord R est alors dans la configuration de la figure 3 a).

Lorsque la dent 150 du verrou 150 arrive au niveau de la rainure circonférentielle 40 de l'embout 20, la dent 150 pénètre dans la rainure circonférentielle 40 sous l'effet du ressort de rappel 171 du verrou 140. Le verrou 140 reprend ainsi sa position de verrouillage, comme illustré à la figure 3 b). L'élément femelle 100 et l'embout 20 sont alors connectés et le passage du fluide est libre, le raccord R étant dans la configuration connectée.

À partir de la configuration connectée, pour désaccoupler le raccord R, il est nécessaire d'actionner le verrou 140 en appuyant sur la surface d'actionnement S156 de la chape d'actionnement 156. Le verrou 140 passe ainsi de sa position de verrouillage à la position de retrait. La dent 150 sort ainsi de la rainure circonférentielle 40, comme illustré à la figure 3 a). En saisissant le raccord R entre la surface d'actionnement S156 et la surface de contre-appui S166, l'opérateur parvient facilement à actionner le verrou 140.

Il est alors possible d'éloigner l'embout 20 de l'élément femelle 100, par un mouvement d'éloignement, qui est un mouvement de translation parallèle à l'axe principal A102. Au cours de ce mouvement d'éloignement, la soupape 132, repoussée par le ressort de rappel 136, reprend sa position avant d'obturation.

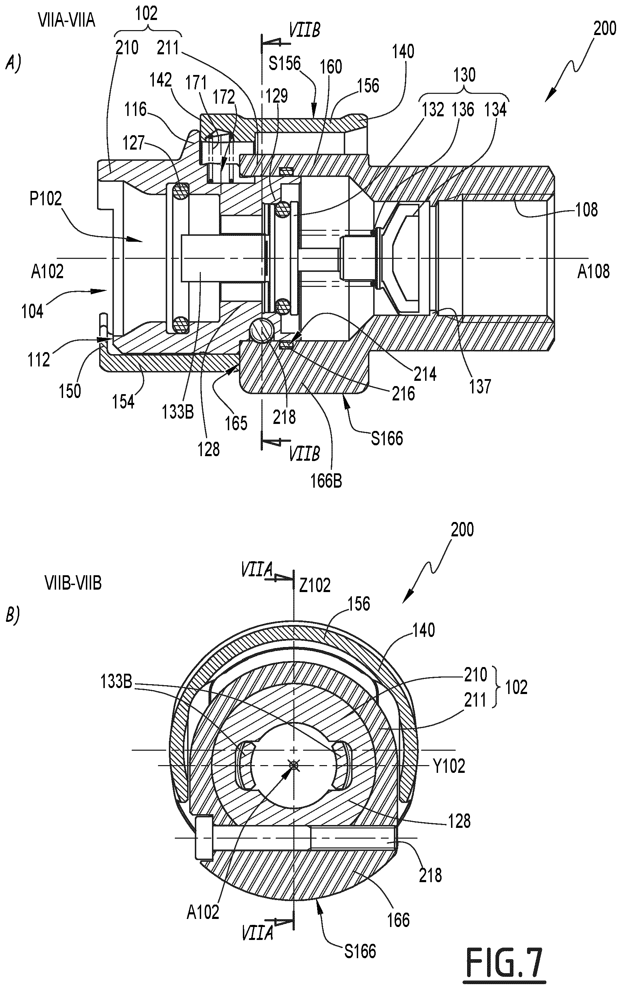

Des modes de réalisation alternatifs de l'invention sont illustrés aux figures 7 à 12.

Dans les modes de réalisation alternatifs de l'invention, les éléments analogues à ceux des autres modes de réalisation portent les mêmes références et fonctionnent de la même façon. Dans ce qui suit, on décrit principalement les différences entre chaque mode de réalisation et le ou les précédents.

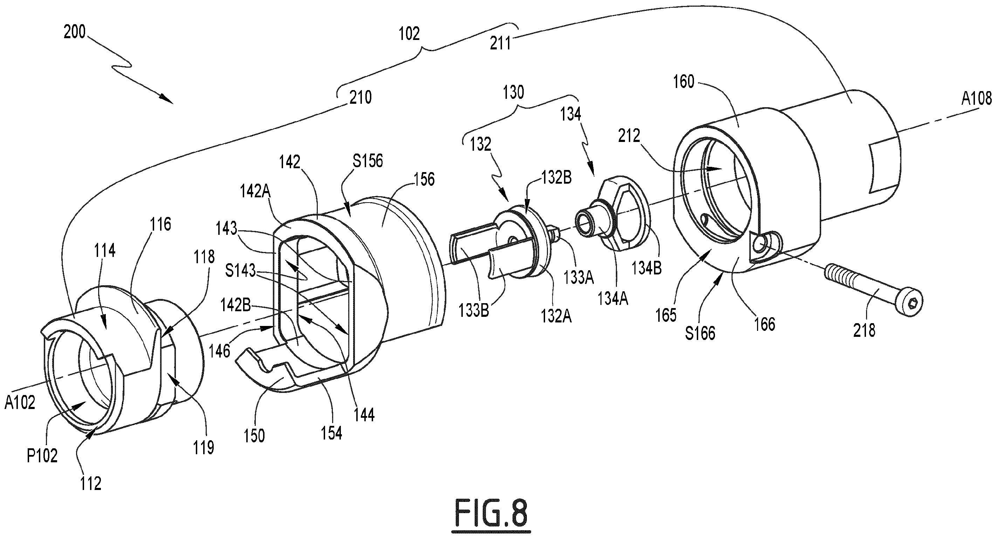

Un élément femelle 200 conforme à un deuxième mode de réalisation de l'invention est représenté aux figures 7 et 8.

Une des principales différences avec le premier mode de réalisation est que dans le deuxième mode de réalisation, le corps 102 de l'élément femelle 200 est formé de plusieurs parties assemblées les unes aux autres. Le corps 102 est ici formé de deux parties, les deux parties incluant une partie distale 210 et une partie proximale 211, qui sont des parties distinctes et sont assemblées l'une à l'autre pour former le corps 102 de l'élément femelle 200. Le passage P102 est ainsi formé par la réunion d'une portion avant, qui est délimitée par la partie distale 210, et d'une portion arrière, qui est délimitée par la partie proximale 211 du corps 102.

La partie distale 210 comprend l'embouchure 104, la collerette 116, le logement de ressort 172 et le siège 129 de soupape. La partie proximale 211 comprend la butée axiale arrière 160 de verrou et les moyens de solidarisation 108 de la conduite de fluide. La face distale 165, le taquet 166 et la surface de contre-appui S166 sont ici des éléments de la partie proximale 211.

La face distale 165 définit un côté avant de la partie proximale 211, dans lequel est ménagé un alésage 212 de réception de la partie distale 210. Une rainure interne 214 est ménagée en creux dans l'alésage 212, l'élément femelle 200 comprenant aussi un joint d'étanchéité 216, qui est reçu dans la rainure interne et qui est prévu pour assurer l'étanchéité entre la partie proximale 211 et la partie distale 210 lorsque la partie distale 210 est reçue dans l'alésage 212.

Les parties distale 210 et proximale 211 sont ici solidarisées grâce à une vis 218, qui permet de définir l'orientation angulaire relatif de la partie distale 210 par rapport à la partie proximale 211 autour de l'axe principal A102.

Dans le deuxième mode de réalisation, la butée interne 137 est réalisé au moyen d'une saillie, qui fait partie de la partie proximale 211.

On décrit à présent l'assemblage de l'élément femelle 200.

De préférence, en premier on met en place le joint 127 dans logement annulaire 126.

Pré assembler les moyens d'obturation 130 à la partie proximale 211 du corps 102, de manière à former un sous-ensemble arrière de l'élément femelle 200 :
- en mettant en place le joint d'étanchéité 216 dans la rainure interne 214 de l'alésage 212 de réception de la partie distale 210 du corps 102,
- en enfilant dans passage de fluide P102 et par l'avant de la partie distale 211, le guide de soupape 134, le ressort de rappel 136 de soupape et la soupape 132.

Pré-assembler le verrou 140 à la partie distale 210, de manière à former un sous-ensemble avant de l'élément femelle 200 :
- en enfilant le verrou 140 par l'arrière de la partie distale 210, jusqu'à ce que le verrou 140 butte contre la collerette 116, plus précisément jusqu'à ce que l'anneau de passage 142 soit en appui contre la butée axiale avant 116 ;
- ensuite, en mettant en place le ressort de rappel 171 du verrou 140 en inclinant le verrou 140 par rapport à la partie distale 210, en insérant le ressort de rappel 171 dans le logement 172 en replaçant le verrou 140 contre la collerette 116.

Ensuite, assembler les sous-ensembles avant et arrière de l'élément femelle 200. Pour cela, approcher l'un de l'autre les sous-ensembles avant et arrière de l'élément femelle 200, de manière à insérer la partie distale 210 dans l'alésage 212 de la partie proximale 211 et former le passage P102. Le joint 216 assure l'étanchéité entre les parties distale 210 et proximale 211, tandis que la soupape 132 coopère avec le siège 129 pour obturer le passage P102.

Ensuite, solidariser les parties distale 210 et proximale 211 du corps 102 en mettant en place et serrant la vis 218. L'élément femelle 200 est alors dans la configuration de la figure 7.

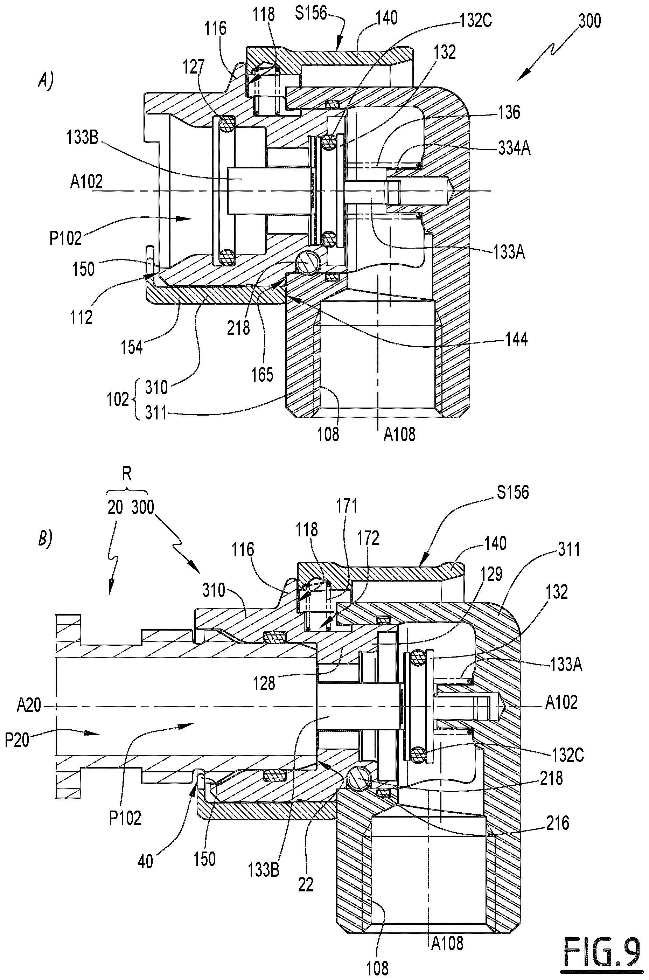

Un élément femelle 300 conforme à un troisième mode de réalisation de l'invention est représenté à la figure 9.

Comme dans le deuxième mode de réalisation, le corps de l'élément femelle est réalisé en deux parties, qui incluent une partie distale 310 et une partie proximale 311 et qui sont assemblés par une vis 218.

Le troisième mode de réalisation se distingue du deuxième mode de réalisation principalement en ce que la portion proximale 311 du corps comporte des moyens de solidarisation 108 avec une conduite qui sont agencés à angle droit avec l'axe principal A102. Autrement dit, la partie proximale 311 du corps 102 est coudée. Plus généralement, l'axe de connexion A108 est sécant à l'axe principal A102 et forme un angle avec l'axe principal A102. De préférence, l'axe de connexion A108 est orthogonal à l'axe principal A102.

Avantageusement, la partie proximale 311 assure également la fonction de guide de soupape. Dans l'exemple illustré, la partie proximale 311 comprend un tube 334A, qui s'étend en saillie dans la portion arrière du passage P102. Le tube 334A est configuré pour coopérer, notamment par complémentarité de formes, avec la queue de soupape 133A, de sorte que la queue de soupape 133A coulisse dans le tube 334A. Autrement dit, le tube de guidage 334A de la queue de soupape 133A est solidaire de la partie proximale 311.

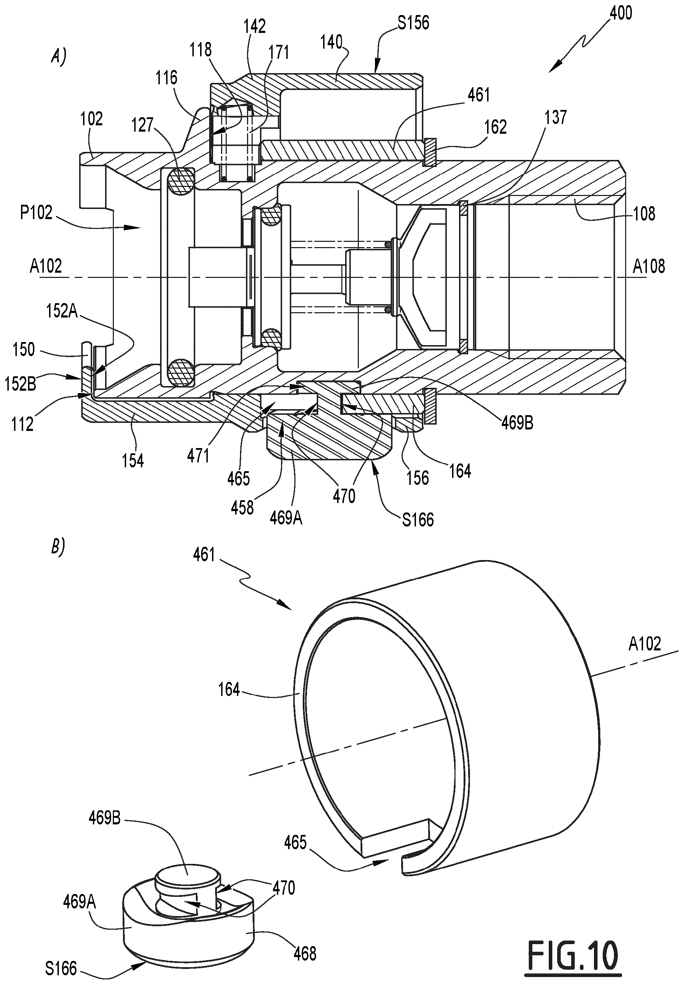

Un élément femelle 400 conforme à un quatrième mode de réalisation de l'invention est représenté à la figure 10. L'élément femelle 400 du quatrième mode de réalisation ressemble à l'élément femelle 100 du premier mode de réalisation en ce que le corps 102 est monobloc.

L'élément femelle 400 du quatrième mode de réalisation diffère de l'élément femelle 100 du premier mode de réalisation principalement en ce que :
- la chape d'actionnement 156 du verrou 140 est tubulaire et entoure complètement le corps 102. La chape d'actionnement 156 présente, dans sa partie inférieure, un trou 458. Le trou 458 est de préférence cylindrique et est agencé à l'opposé, par rapport à l'axe principal A102, de la surface d'actionnement S156.
- L'élément femelle 400 comprend une bague d'arrêt 461, qui est réalisé en plusieurs partie.

Dans l'exemple illustré, la bague d'arrêt 461 comprend, outre la portion annulaire 164, un pion 468, qui s'étend en saillie par rapport à la portion annulaire 164 et qui ménage la surface de contre-appui S166. La chape d'actionnement 156 entoure la portion annulaire 164 de la bague d'arrêt 161, le trou 458 étant agencé de manière à permettre le passage du pion 468, la surface de contre-appui S166 étant accessible depuis l'extérieur de la chape d'actionnement 166 quelle que soit la position du verrou 140.

Dans l'exemple illustré, le pion 468 comporte un cylindre inférieur 469A et un cylindre supérieur 469B, qui sont séparés par au moins une rainure 470, ici deux rainures. Une fente axiale 465 est ménagée dans la portion annulaire 164, pour le passage de la rainure 470 du pion 468. Un logement 471 est ménagé dans le corps 102, pour recevoir une partie du cylindre supérieur 469B.

Lorsque la bague d'arrêt 461 est montée, le pion 468 est fixe par rapport au corps 102. La face d'extrémité du cylindre inférieur 469A forme la surface de contre-appui S166, qui est accessible depuis l'extérieur de l'élément femelle 400. L'opérateur peut alors facilement déverrouiller le raccord R en appuyant simultanément sur la surface d'actionnement S156 et la surface de contre appui S166.

L'assemblage de l'élément femelle de raccord 400 comporte les étapes suivantes.

De préférence, en premier on met en place le joint 127 dans logement annulaire 126.

Mettre en place les moyens d'obturation 130 dans le corps 102. Pour cela, enfiler par l'arrière du passage P102 la soupape, 132 le ressort de rappel 136 de soupape, le guide de soupape 134 et le circlip interne 137. Ensuite, enfiler le verrou 140 par l'arrière du corps 102, jusqu'à ce que le verrou 140 butte contre la collerette tronquée 116 du corps 102 - plus précisément jusqu'à ce que l'anneau de passage 142 soit en appui contre la butée axiale avant 116 du corps 102 -.

La face proximale 152A de la dent 150 est alors située en regard de la face distale 112 du corps 102. Ensuite, comme illustré à la figure 6 b), incliner le verrou par rapport au corps 102 tout en maintenant la face proximale 152A de la dent 150 en regard de la face distale 112 du corps 102, de manière à libérer l'accès au logement 172, et permettre la mise en place du ressort 171. Ensuite replacer le verrou 140 contre la collerette 116. Le logement 471 du corps 102 est alors aligné, selon l'axe de verrouillage Z102, avec le trou 458 du verrou 140.

Ensuite, mettre en place le cylindre supérieur 469B du pion 468 dans le logement 471 du corps 102, puis mettre en place la bague de butée arrière 461 en l'enfilant par l'arrière du corps 102 et sous la chape d'actionnement 156 du verrou 140, jusqu'à ce que la bague d'arrêt 461 butte contre le verrou 140. Ensuite, immobiliser axialement la bague d'arrêt 461 en mettant en place le circlip externe 162.

La bague d'arrêt 461 du quatrième mode de réalisation est plus facile à fabriquer que la bague d'arrêt 161 du premier mode de réalisation.

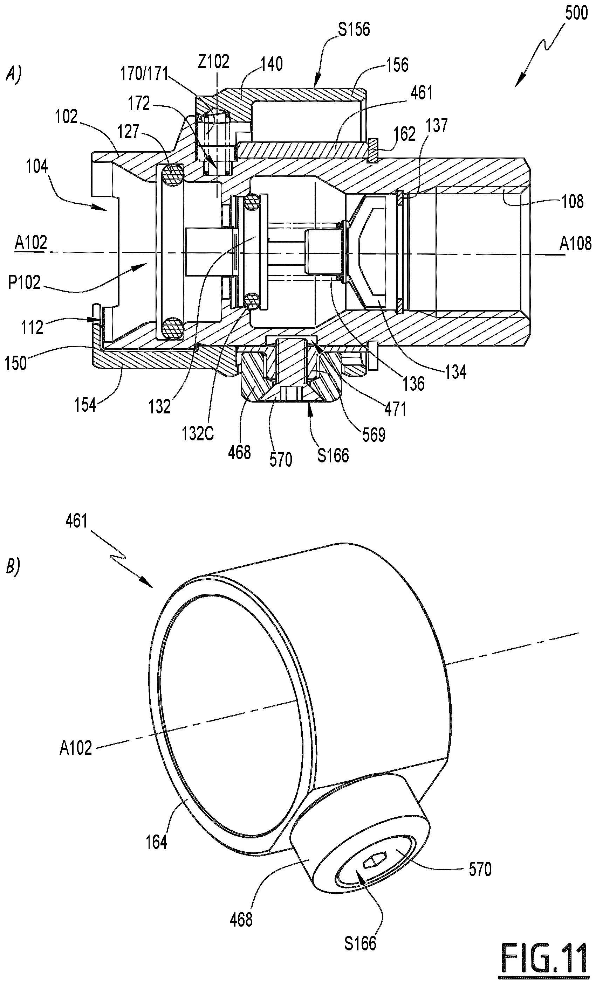

Un élément femelle 500 conforme à un cinquième mode de réalisation de l'invention est représenté à la figure 11.

L'élément femelle 500 conforme au cinquième mode de réalisation diffère de l'élément de raccord 400 du quatrième mode de réalisation de l'invention principalement en ce que la bague d'arrêt 461 présente un téton 569, qui est ménagé en saillie sur la portion annulaire 164, qui s'étend radialement à l'axe principal A102 et dans lequel est ménagé un trou taraudé, le pion 468 étant vissé sur le téton 569 au moyen d'une vis 570. La surface de contre-appui S166 est ici formé en partie par une tête de la vis 570 et par le pion 468.

Le pion 468 est ainsi facilement remplaçable, sans avoir à démonter le reste de l'élément femelle 500.

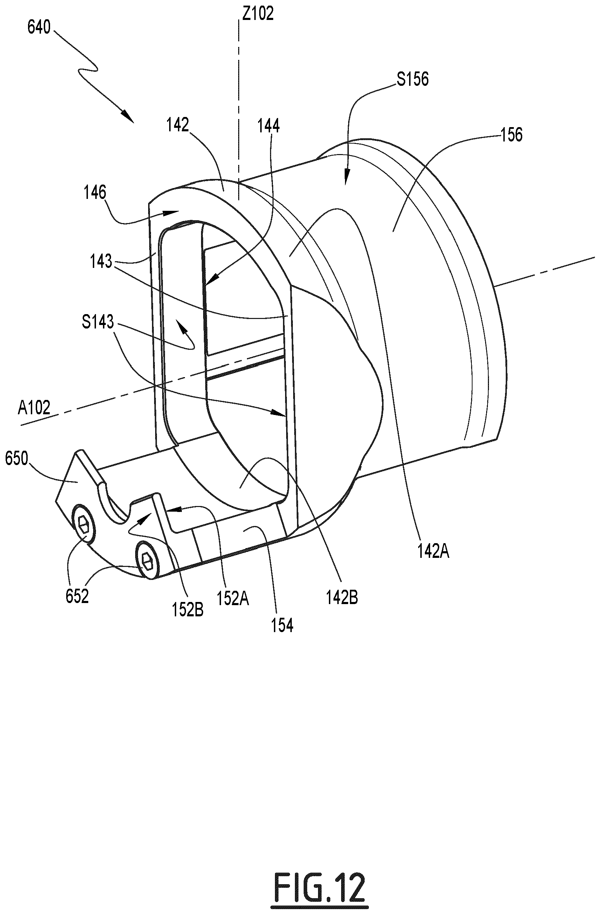

Un verrou 640 appartenant à un élément femelle conforme à un sixième mode de réalisation de l'invention de l'invention est représenté à la figure 12.

Dans chacun des modes de réalisation précédents, le verrou est monobloc, c'est à dire réalisé d'une seule pièce. En particulier, la dent 150 est venue de matière avec le reste du verrou 140. Le verrou présente une forme relativement complexe. Or, lors de chaque cycle de connexion / déconnexion du raccord, la dent frotte contre l'embout 20 et tend à s'user, ce qui peut mener à démonter l'élément femelle pour procéder au remplacement du verrou.

Dans le sixième mode de réalisation, l'élément femelle comprend un verrou 640 avec une dent 650, qui est une pièce rapportée au reste du verrou 640, en particulier la dent 650 est fixée au reste du verrou 640 au moyen d'organes de fixation réversibles, ici au moyen de deux vis 652. Il est ainsi possible de remplacer la dent 650 sans avoir à démonter le reste de l'élément femelle. Un autre avantage est de pouvoir réaliser le verrou 640 en deux matériaux différents, la dent 650 étant de préférence en métal, pour résister à l'usure, tandis que le reste du verrou 640 est de préférence réalisé en matériau polymère synthétique. Ainsi le reste du verrou 640 peut être fabriqué en série par injection à chaud, ce qui est plus économique et plus léger que de fabriquer l'intégralité du verrou en métal.

Dans tous les modes de réalisation illustrés, l'élément femelle est prévu pour la connexion avec un embout 20 de type turbo compact. L'invention n'est bien entendu pas limitée à ce type d'embout turbo compact mais peut également s'appliquer à tout type d'embout disposant d'une rainure circonférentielle, comme par exemple un tube cylindrique avec une simple rainure à flancs droits.

Les modes de réalisation et les variantes mentionnées ci-dessus peuvent être combinés entre eux pour générer de nouveaux modes de réalisation de l'invention.

## Revendications

1. Élément femelle (100 ; 200 ; 300 ; 400 ; 500) pour la connexion fluidique rapide à un embout (20) comportant une rainure circonférentielle (40), cet élément femelle comprenant :
- un corps (102), qui ménage un passage de fluide (P102) et qui comprend:
• une partie distale (110 ; 210 ; 310), de laquelle le passage débouche par une embouchure (104) configurée pour recevoir l'embout (20) dans une configuration emmanchée de l'embout (20), l'embouchure (104) définissant un axe principal (A102) du corps (102),
• une partie proximale (111 ; 211 ; 311), qui comprend des moyens de solidarisation (108) avec une conduite de fluide,
la partie distale (110 ; 210 ; 310) et la partie proximale (111 ; 211 ; 311) définissant respectivement un côté avant et un côté arrière du corps (102) et de l'élément femelle,
- un verrou (140 ; 640), qui comprend :
• un anneau de passage (142), qui entoure le corps (102) et,
• une dent (150 ; 650), qui est apte à pénétrer dans la rainure circonférentielle (40) de l'embout (20),
• une surface d'actionnement (S156), qui est située à l'opposé de la dent (150 ; 650) par rapport à l'axe principal (A102),
le verrou étant mobile en translation suivant un axe de verrouillage (Z102) perpendiculaire à l'axe principal (A102) entre une position de verrouillage, dans laquelle la dent (150 ; 650) pénètre dans la rainure circonférentielle (40) de l'embout (20) en configuration emmanchée, et une position de retrait, dans laquelle la dent (150 ; 650) ne pénètre pas dans la rainure circonférentielle,
- un moyen de rappel (170) du verrou dans sa position de verrouillage,
dans lequel :
- le verrou (140 ; 640) comprend un support de dent (154), qui est agencé à l'extérieur du corps (102), qui présente une forme allongée avec une première extrémité (155A), par laquelle le support de dent (154) est relié à l'anneau de passage (142), et une deuxième extrémité (155B), par laquelle le support de dent (154) est relié à la dent (150 ; 650), la dent étant décalée axialement vers l'avant de l'anneau de passage (142),
- la surface d'actionnement (S156) s'étend le long de l'axe principal (A102) vers l'arrière de l'anneau de passage (142),
- l'anneau de passage (142) comprend une face proximale (144), qui s'étend dans un plan perpendiculaire à l'axe principal (A102) et qui est orientée vers l'arrière,
- l'élément femelle (100 ; 200 ; 300 ; 400 ; 500) comprend une butée axiale arrière (160) de verrou, qui ménage une face distale (165) située en regard de la face proximale (144) de l'anneau de passage (142), la butée axiale arrière (160) étant configurée pour empêcher le déplacement axial de l'anneau de passage (142) vers l'arrière du corps (102).

2. Élément femelle (100 ; 200 ; 300 ; 400 ; 500) selon la revendication 1, dans lequel :
- la dent (150 ; 650) comprend une face proximale (152A) et une face distale (152B), qui est orientée à l'opposé de la face proximale et qui est perpendiculaire à l'axe principal (A102),
- la face proximale (152A) de la dent est située en regard d'une face distale (112) du corps (102),
- la face distale (152B) de la dent constitue une face d'extrémité de l'élément femelle.

3. Élément femelle (100 ; 200 ; 300 ; 400 ; 500) selon l'une quelconque des revendications 1 ou 2, dans lequel :
- le corps (102) ménage une butée axiale avant (118), qui est située en regard de la face distale (165) de la butée de verrou (160),
- l'anneau de passage (142) comprend une face distale (146), qui est orientée à l'opposé de la face proximale (144) de l'anneau de passage et qui coopère avec la butée axiale avant (118) du corps (102) de manière à empêcher le déplacement axial de l'anneau de passage (142) vers l'avant du corps (102).

4. Élément femelle (100 ; 200 ; 300 ; 400 ; 500) selon la revendication 3, dans lequel :
- le verrou (140 ; 640) et le corps (102) sont conformés de sorte à permettre la mise en place du verrou (140 ; 640) par une extrémité proximale du corps (102), jusqu'à ce que l'anneau de passage (142) soit en appui contre la butée axiale avant (118) du corps.

5. Élément femelle (100 ; 200 ; 300 ; 400 ; 500) selon l'une quelconque des revendications 1 à 4, dans lequel :
- l'anneau de passage (142) comprend deux bras (143) de jonction du support de dent (154) à la surface d'actionnement (S156), les deux bras étant situés de part et d'autre du corps (102),
- chaque bras ménage une surface d'appui (S143), les deux surface d'appui étant situées en regard l'une de l'autre et étant parallèles à l'axe de verrouillage (Z102) et parallèles à l'axe principal (A102),
- le corps (102) comprend deux surfaces de guidage (119), qui sont ménagées de part et d'autres du corps (102), qui sont parallèles l'une à l'autre et qui sont chacune parallèles à l'axe principal (A102),
- chacune des surfaces d'appui est située en regard d'une surface de guidage respective, les surfaces d'appui et de guidage coopérant entre elles de manière à guider le verrou (140 ; 640) entre sa position de verrouillage et sa position de retrait.

6. Élément femelle (100 ; 400 ; 500) selon l'une quelconque des revendications 1 à 5, dans lequel :
- le corps (102) est monobloc, la partie distale (110) et la partie proximale (111) faisant partie d'une même pièce,
- la butée axiale arrière (160) de verrou (140 ; 640) est une bague d'arrêt (161 ; 461), qui est distincte du corps (102) et qui entoure le corps,
- le corps (102) et la butée axiale arrière (160) sont configurés pour permettre la mise en place de la butée axiale arrière (160) par l'arrière du corps.

7. Élément femelle (100) selon la revendication 6, dans lequel :
- la bague d'arrêt (161) ménage une surface de contre-appui (S166), qui est accessible depuis l'extérieur de l'élément femelle, qui est fixe par rapport au corps (102) et qui est située à l'opposé de la surface d'actionnement (S156) par rapport à l'axe principal (A102).

8. Élément femelle (400 ; 500) selon la revendication 6, dans lequel :
- l'élément femelle comprend un pion (468), qui est solidaire de la bague d'arrêt (461),
- le pion ménage une surface de contre-appui (S166), qui est accessible depuis l'extérieur de l'élément femelle, qui est fixe par rapport au corps (102) et qui est située à l'opposé de la surface d'actionnement (S156) par rapport à l'axe principal (A102).

9. Élément femelle (200 ; 300) selon l'une quelconque des revendications 1 à 5, dans lequel :
- la partie distale (210 ; 310) et la partie proximale (211 ; 311) sont des parties distinctes, qui sont assemblées l'une à l'autre pour former le corps (102),
- la partie distale (210 ; 310) forme l'embouchure (104) du raccord et comporte la butée axiale avant (118) du verrou (140 ; 640)
- la partie proximale (211 ; 311) forme la butée arrière de verrou (160) et comprend les moyens de solidarisation (108) avec la conduite de fluide.

10. Élément femelle (200) selon la revendication 9, dans lequel :
- la partie proximale (211) du corps (102) ménage une surface de contre-appui (S166), qui est accessible depuis l'extérieur de l'élément femelle, qui est fixe par rapport au corps (102) et qui est située à l'opposé de la surface d'actionnement (S156) par rapport à l'axe principal (A102).

11. Élément femelle (300) selon la revendication 9, dans lequel :
- les moyens de solidarisation (108) définissent un axe de connexion (A108) avec la conduite de fluide,
- l'axe de connexion (A108) est orthogonal à l'axe principal (A102).

12. Élément femelle (100 ; 200 ; 300 ; 400 ; 500) selon l'une quelconque des revendications 1 à 11, dans lequel :
- l'élément femelle comprend des moyens d'arrêt axial (162) de la butée arrière de verrou.

13. Élément femelle (100 ; 200 ; 300 ; 400 ; 500) selon l'une quelconque des revendications 1 à 12, dans lequel :
- l'élément femelle comprend des moyens d'obturation (130) du passage de fluide (P102), les moyens d'obturation incluant :
• une soupape (132), qui est mobile en translation le long de l'axe principal (A102) entre une position avant d'obturation, dans laquelle la soupape est en appui étanche contre un siège (129) du corps (102) et ferme le passage de fluide (P102), et une position arrière d'ouverture, dans laquelle la soupape n'obture pas le passage de fluide,
• un guide de soupape (134) apte à guider la soupape (132) en translation le long de l'axe principal (A102), et
• un ressort de rappel (136) de la soupape dans sa position d'obturation,
- la soupape (132) est configurée pour être repoussée par l'embout (20) de la position avant d'obturation vers la position arrière d'ouverture lors de l'introduction de l'embout (20) dans l'embouchure (104).
